# EUROPEAN PATENT APPLICATION

(11) **EP 3 315 465 A1**
(43) Date of publication of application: **02.05.2018**
(21) Application number: 17199272.0
(22) Date of filing: 30.10.2017
(51) Int. Cl.: C02F 1/00, G06Q 50/06

(54) **METHOD AND SYSTEM FOR DYNAMICALLY MANAGING WASTE WATER TREATMENT PROCESS FOR OPTIMIZING POWER CONSUMPTION**

(30) Priority: 28.10.2016 IN 201641037166
(71) Applicant: Carrier Corporation, Jupiter, FL 33478 (US)
(72) Inventor: VENKITAPATHI, Prabhu Raja Subbarayalu, 641015 Tamil Nadu (IN); ANNAMALAI, Vinoth Kumar, 600082 Chennai (IN); SINGH, Jasmine, 110078 New Delhi (IN); KUMAR, Niraj, Jharkhand (IN)
(74) Representative: Taylor, Adam David

(57) **Abstract**

The present disclosure relates to method and system for dynamically managing waste water treatment process in a water treatment plant. Operational data related to water treatment process are collected from various data sources and operational parameters are identified at various levels using the operational data. Historical and real-time threshold values of operational parameters are identified based on historic and real-time operational data and real-time operational data respectively. Degrees of significance of operational parameters on the water treatment processes are calculated at each level. Further, plurality of inflection points, indicating optimal range of operational data, are identified based on degrees of significance, historical and real-time thresholds. Finally, water treatment processes are optimized based on inflection points, thereby optimizing power consumption for the water treatment plant. The above method enables large-scale management of the water treatment processes, without actually visiting a water treatment plant, thereby reducing dependency on expertise and skilled resources.

## Description

### TECHNICAL FIELD

The present subject matter is related, in general to waste water treatment process, and more particularly, but not exclusively to a method and system for dynamically managing waste water treatment process for optimizing power consumption.

### BACKGROUND

Waste water is treated in waste water treatment plants which include various physical, chemical and biological treatment processes to clean up depending on the type and extent of the contamination. However, the processes involved in the waste water treatment plants are complex due to dynamic variations in the parameters related to these processes. For example, various process parameters such as volume of influent, volume of effluent, Biochemical Oxygen Demand (BOD) level of the water, retention time of water in the treatment plant etc. are subjected to constant variations and hence they need to be monitored and controlled with respect to standard output quality benchmarks and/or Standard Operating Procedures (SOPs) at each section of the treatment process. Further, operations involved in the treatment process may vary based on various critical parameters such as, inflow volume and quality of waste water which, in turn, results in increase/decrease in the values of other parameters.

Also, the operations involved in the treatment process may vary due to reactive controlling of the equipments used in the treatment process, manual interventions by operators, lack of correlation with multiple parameters and nature of implementation and control philosophies. These variations at the waste water treatment plant results in enormous wastages of energy/power, deterioration of assets and/or equipments, increased running and maintenance cost of the equipments in the treatment plant.

The challenges mainly faced during dynamically managing the waste water treatment process in a waste water treatment plant includes calculation of degrees of influence of each of the operational parameters and identifying an optimal range for operating each of the operational parameters in order to optimize power consumption for the waste water treatment plant.

### SUMMARY

The present disclosure relates to a method of dynamically managing waste water treatment process in a waste water treatment plant. The method comprises collecting, by a waste water treatment system, operational data from one or more data sources. One or more operational parameters are identified at one or more levels based on the operational data. The one or more operational parameters are used for managing one or more waste water treatment processes. One or more historical threshold values for each of the one or more operational parameters are identified at the one or more levels based on historic operational data associated with each of the one or more operational parameters. Further, one or more degrees of influence for each of the one or more operational parameters are calculated at the one or more levels based on historic operational data associated with each of the one or more operational parameters. Upon calculating the one or more degrees of influence, one or more real-time threshold values for each of the one or more operational parameters are determined based on at least one of real-time operational data, historical threshold values and degree of freedom related to each of the one or more operational parameters. Furthermore, the one or more inflection points for each of the one or more operational parameters are identified based on the one or more historical threshold values, the one or more real-time threshold values and the one or more degrees of significance. Finally, one or more control mechanisms are optimized based on the one or more inflection points, thereby optimizing power consumption for the waste water treatment plant.

Further, the present disclosure relates to a waste water treatment system for dynamically managing waste water treatment process in a waste water treatment plant. The waste water treatment system comprises a processor and a memory communicatively coupled to the processor, wherein the memory stores processor-executable instructions, which, on execution, causes the processor to collect operational data from one or more data sources. The processor identifies one or more operational parameters at one or more levels based on the operational data. The one or more operational parameters are used for managing one or more waste water treatment processes. Then the processor identifies one or more historical threshold values for each of the one or more operational parameters at the one or more levels based on historic operational data associated with each of the one or more operational parameters. One or more degrees of influence for each of the one or more operational parameters are calculated at the one or more levels based on historic operational data associated with each of the one or more operational parameters. Upon calculating the one or more degrees of influence, the processor determines one or more real-time threshold values for each of the one or more operational parameters based on at least one of real-time operational data, historical threshold values and degree of freedom related to each of the one or more operational parameters. Then the processor identifies one or more inflection points for each of the one or more operational parameters based on the one or more historical threshold values, the one or more real-time threshold values and the one or more degrees of significance. Finally, the processor optimizes one or more control mechanisms based on the one or more inflection points, thereby optimizing power consumption for the waste water treatment plan.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG. 1A** shows an exemplary environment for dynamically managing waste water treatment process in a waste water treatment plant in accordance with some embodiments of the present disclosure;
**FIG. 1B** shows a detailed block diagram illustrating a waste water treatment system in accordance with some embodiments of the present disclosure;
**FIG. 2A** shows an exemplary list of various static operational data at one or more levels of the waste water treatment plant in accordance with few embodiments of the present disclosure;
**FIG. 2B** shows an exemplary list of various dynamic operational data in accordance with few embodiments of the present disclosure;
**FIG. 3A** illustrates a method of identifying one or more historical threshold values in accordance with few embodiments of the present disclosure;
**FIG. 3B** shows a block diagram illustrating a method of identifying one or more real-time threshold values in accordance with few embodiments of the present disclosure;
**FIG. 3C** shows a flowchart illustrating operations of an inflection module in the waste water treatment system in accordance with few embodiments of the present disclosure;
**FIG. 3D** indicates various levels of execution of the inflection module in accordance with few embodiments of the present disclosure;
**FIG. 3E** shows a block diagram illustrating methods of auto-tuning and self-healing of the waste water treatment processes in the waste water treatment plant in accordance with few embodiments of the present disclosure;
**FIG. 3F** shows a block diagram illustrating a method of evaluating performance of one or more control mechanisms configured in the waste water treatment plant in accordance with few embodiments of the present disclosure;
**FIG. 4** shows a flowchart illustrating a method for dynamically managing waste water treatment process in a waste water treatment plant in accordance with some embodiments of the present disclosure; and
**FIG. 5** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a method and system for dynamically managing waste water treatment process in a waste water treatment plant. The waste water treatment system collects various operational data from one or more data sources, such as OPTIMA, OSI PI, L-TAPP and R-TAPP associated with the waste water treatment plant. The operational data may be of two types namely, static operational data dynamic operational data. The static operational data are those which are collected at one time and remain unchanged over a period of time. Few examples of the static data include Site Operational Manuals (SOMs), Electrical Single Line Diagram (SLDs) and other system architecture details. The dynamic operational data are those which may vary over a period of time. Some of the examples for dynamic operational data include volume of influent/effluent flow into the waste water treatment plant, atmospheric pressure and other weather related data.

In an embodiment, the operational data collected from the one or more data sources are used to identify one or more operational parameters at one or more levels based on the operational data. As an example, the one or more operational parameters include, without limiting to, influent flow volume, retention time of the water, sludge volume, effluent flow volume and power consumption. The one or more operational parameters are used for managing the one or more waste water treatment processes. In an implementation, the one or more levels of the waste water treatment plant may include enterprise level, site level, section level, sub-section level, asset level, sub-asset level, process level, sub-process level and equipment level. Further, one or more historical threshold values are identified for each of the one or more operational parameters based on historic operational data associated with each of the one or more operational parameters. The historic operational data may be collected over a predefined period of time, for example 1 year or 2 years by analyzing each levels of the waste water treatment plant for the predefined period of time.

Further, one or more real-time threshold values for each of the one or more operational parameters are determined based on the real-time operational data related to each of the one or more operational parameters along with one or more degrees of influence. As an example, the real-time threshold values may be determined based on the one or more dynamic variations occurring at the one or more levels of the waste water treatment plant. Thereafter, one or more degrees of influence of each of the one or more operational parameters are calculated in a sequential order at each of the one or more levels. In an embodiment, the degree of influence of the one or more operational parameters indicates a measure of the extent to which an operational parameter affects the one or more waste water processes.

In an embodiment, each of the one or more historical threshold values, the one or more real-time threshold values and the one or more degrees of significance are used to calculate one or more inflection points for each of the one or more operational parameters. The one or more inflection points indicate an optimal range of operational data in which each of the one or more operational parameters have to be operated in order to achieve the desired targets and to reduce overall power consumption in the waste water treatment plant. Upon determining the one or more inflection points, one or more control mechanisms of the waste water treatment plant are optimally performed in optimal range of operational data, thereby optimizing the power consumption for the waste water treatment plant.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

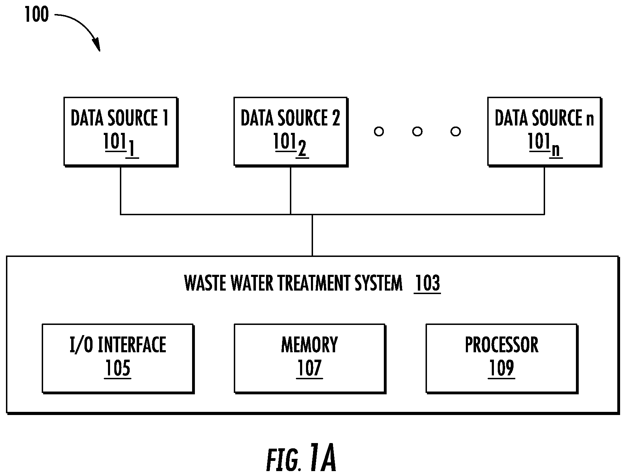

**FIG. 1A** shows an exemplary environment for dynamically managing waste water treatment process in a waste water treatment plant in accordance with some embodiments of the present disclosure.

The environment **100** comprises one or more data sources (data source 1 **101₁** to data source **101ₙ,** collectively referred as data sources **101**) and a waste water treatment system **103.** The waste water treatment system **103** further comprises an I/O interface **105,** a memory **107** and a processor **109.** In an embodiment, the waste water treatment system **103** collects operational data required for performing waste water treatment processes in a waste water treatment plant from the one or more data sources **101** through the I/O interface **105.** The one or more data sources **101** may include, without limiting to, an OPTIMA, OSI PI, L-TAPP or R-TAPP. As an example, the operational data may include, without limiting to, volume of influent, volume of effluent, Biochemical Oxygen Demand (BOD) level of the water, Chemical Oxygen Demand (BOD) level of the water, NTK, Mixed liquor suspended solids (MLSS) level in the waste water, percentage of yield in the waste water treatment plant, retention time of the water, position of valves and asset run hours, which are constantly monitored and controlled at the waste water treatment plant. In an embodiment, the operational data may be categorized as static operational data (referred as static data **117** hereinafter) and dynamic operational data **119** (referred as dynamic data **119** hereinafter). The operational data that are collected one time and do not change over a period of time without any major changes in the plant may be categorized under the static data **117** category. Examples of the static data **117** may include manuals and Standard Operating Procedures (SOPs) associated with the waste water treatment plant. Similarly, the operational data that vary over a period of time may be categorized as the dynamic data **119.** As an example, the dynamic data **119** associated with the waste water treatment plant may be Dissolved Oxygen (DO) level of the waste water.

In an embodiment, the operational data may be collected from various data points selected at one or more levels of the waste water treatment plant. The one or more levels of the waste water treatment plant include, without limiting to, enterprise level, site level **311,** section level **313,** sub-section level **315,** asset level **317,** sub-asset level **319,** process level, sub-process level and equipment level **320.** The operational data collected at each levels of the waste water treatment plant are then harmonized and mapped against the respective levels of the waste water treatment plant.

Further, the waste water treatment system **103** identifies one or more operational parameters at each of the one or more levels based on the collected operational data. As an example, the one or more operational parameters include, without limiting to, influent flow volume, retention time of the water, sludge volume, effluent flow volume and power consumption. The one or more operational parameters may be obtained by analysing and decoding the static data **117** and the dynamic data **119** associated with the waste water treatment plant. Upon identifying the one or more operational parameters, the waste water treatment system **103** identifies one or more historical threshold values **123** for each of the one or more operational parameters at the one or more levels based on historic operational data **123₁** associated with each of the one or more operational parameters. Further, one or more real-time threshold values **125** for each of the one or more operational parameters are determined based on real-time operational data, historical threshold values and degrees of influence related to each of the one or more operational parameters. The waste water treatment system **103** further identifies one or more inflection points for each of the one or more operational parameters based on the one or more real-time threshold values **125** and one or more degrees of significance. In an embodiment, the one or more degrees of significance of each of the one or more operational parameters are identified at each of the one or more levels in a sequential order.

The one or more inflection points may include an optimal range for operating each of the one or more operational parameters in the waste water treatment plant, at each of the one or more levels. One or more control mechanisms **321** used for the waste treatment process may be optimized by operating each of the one or more operational parameters in the identified optimal range, thereby optimizing overall power consumption in the waste water treatment plant. The process of identifying the one or more historical threshold values **123,** the one or more real-time threshold values **125** and the one or more inflection points are explained in detail in the below sections of the disclosure.

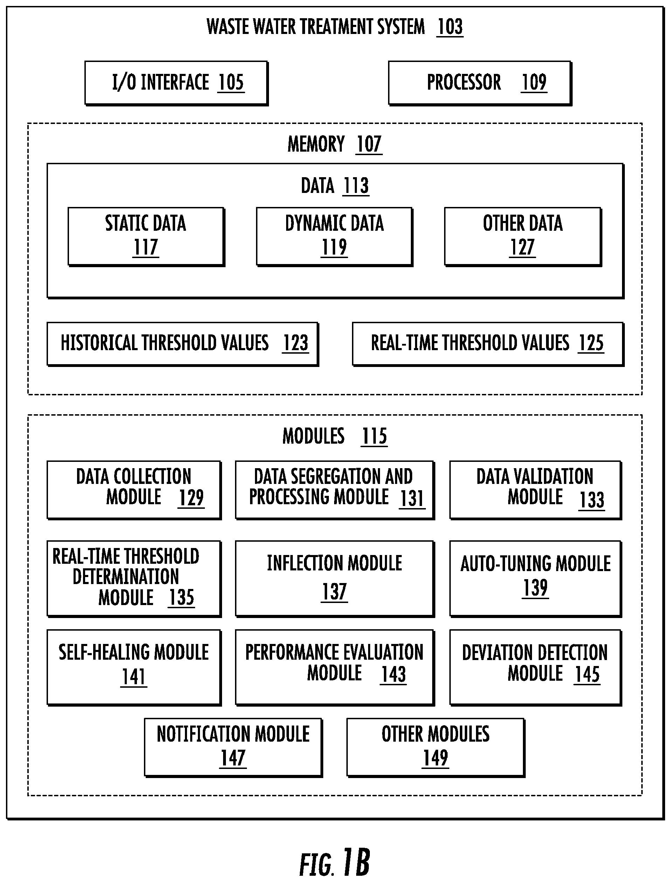

**FIG. 1B** shows a detailed block diagram illustrating a waste water treatment system in accordance with some embodiments of the present disclosure;

The waste water treatment system **103** comprises the I/O interface **105,** the memory **107** and the processor **109.** The I/O interface **105** may be configured to receive operational data from one or more data sources **101.** The memory **107** is communicatively coupled to the processor **109.** The processor **109** is configured to perform one or more operations of the waste water treatment process **101** for dynamically managing waste water treatment process in a waste water treatment plant based on the operational data for optimizing power consumption received from the one or more data sources **101.** In one implementation, the waste water treatment system **103** comprises data **113** and modules **115** for performing various operations in accordance with the embodiments of the present disclosure. The memory **107** may store the data **113** and one or more threshold values including, but not limiting to, historical threshold values **123** and real-time threshold values **125** of the one or more operational parameters. In an embodiment, the data **113** may include, without limiting to, static data **117,** dynamic data **119** and other data **127.**

In one embodiment, the aforementioned data **113** can be organized using data models, such as relational or hierarchical data models. The other data **127** may store data, including temporary data and temporary files, generated by modules **115** for performing the various functions of the waste water treatment system **103.**

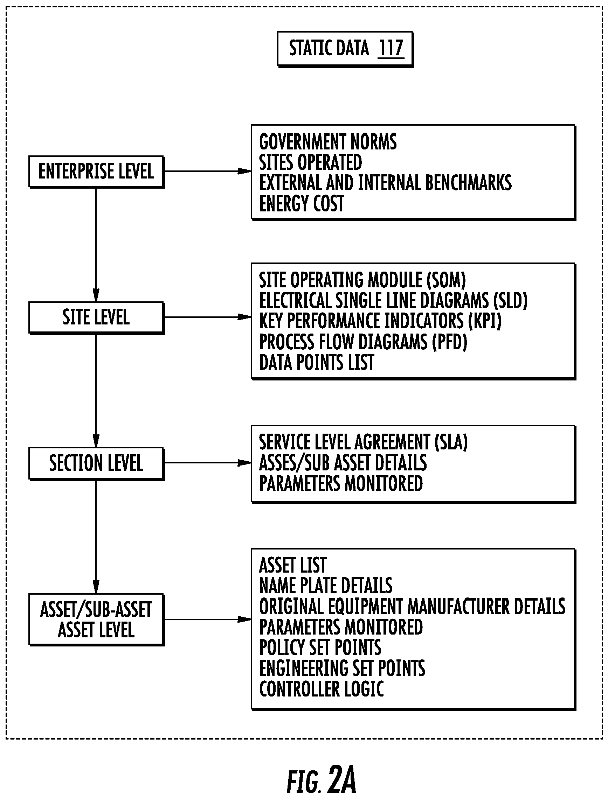

In an embodiment, the static data **117** are the operational data that are collected one time and does not change over a period of time. **FIG. 2A** shows a list of the static data **117** collected at the one or more levels of the waste water treatment plant. As shown in **FIG. 2A****,** the static data **117** collected at the enterprise level may include at least one of total number of sites owned by a client, quality norms for each site with respect to government policies and performance benchmarks for each site. The enterprise level static data **117** are collected and then information obtained from the enterprise level static data **117** is harmonized with respect to the site level **311.** The site level static data **117** comprises site specific information and manuals such as, Site Operating Manual (SOM), Process Flow Diagram (PFD), Electrical Single Line diagrams (SLDs), Key Performance Indicators (KPIs), types of control systems **323** used, type of control mechanisms **321** used, the one or more data sources **101** used for collecting data, list of assets/sub-assets/equipments within the site, preventive maintenance schedules and a comprehensive list of the data points.

Upon collecting the site level static data **117,** one or more sections within the site are identified for collecting the static data **117** related to each of the one or more sections in the site. The static data **117** collected at the section level **313** may include, without limiting to, number of sections available, process output of each of the one or more sections, information related to one or more assets in the section and Service Level Agreements (SLAs) between the one or more sections in the waste water treatment plant are collected.

In an embodiment, the static data **117** may also be collected at the asset level **317** and/or sub-asset level **319.** As an example, the static data **117** collected at the asset level **317** may include asset list, each asset name plate details, sub assets list, maintenance history of each asset, changes made in the asset, output of each asset. Further, the static data **117** collected at the sub-asset level **319** includes details of operational parameters being monitored, policies related to quality, set point and performance are also collected. Finally, a complete set of all the static data **117** may be collected and stored in a database associated with the waste water treatment system **103.**

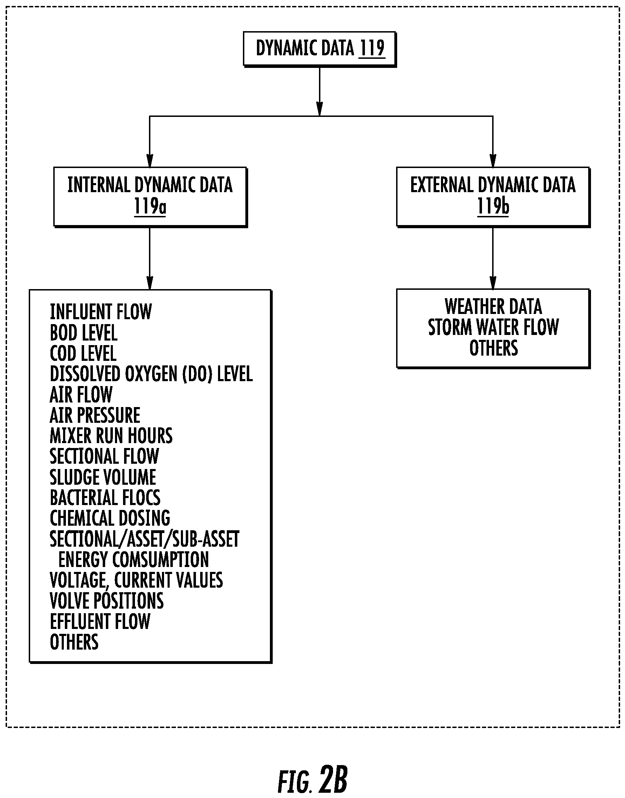

In an embodiment, the dynamic data **119** are the operational data which vary periodically based on one or more real-time operations and/changes happening at the waste water treatment plant. The dynamic data **119** may be categorized into two groups namely, internal dynamic data **119a** and external dynamic data **119b,** as shown in **FIG. 2B****.** As an example, the internal dynamic data **119a** may include, without limiting to, volume of influent flow, volume of effluent flow, DO level of the water, BOD, COD, air flow, air pressure, mixer run hours, sectional flow, sludge volume, bacterial flocs, chemical dosing, retention time, aerator run hours, energy consumption values, amount of energy generated, voltage and current values, valve positions and volume of sludge. As an example, the external dynamic data **119b** may include, weather related data such as, storm water data, rainfall data, relative humidity, air temperature, air and/or atmospheric pressure and other data like tariff structures from energy distributors etc.

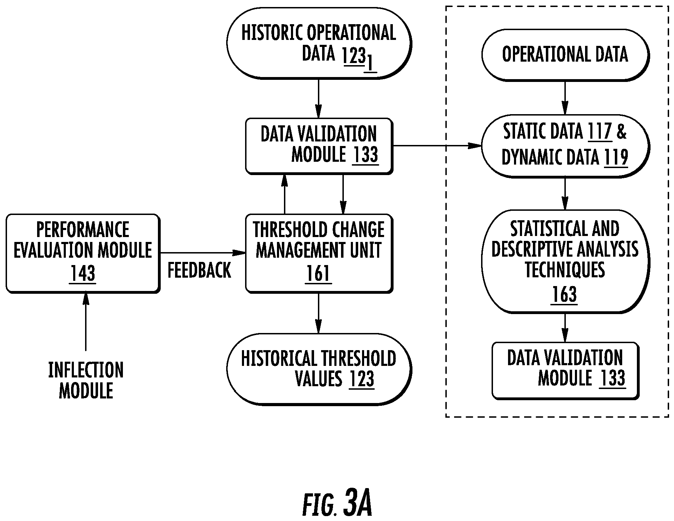

**FIG. 3A** illustrates a method of identifying one or more historical threshold values.

As shown in **FIG. 3A****,** the historical threshold values **123** are identified based on the historic operational data **123₁** collected from the one or more levels of the waste water treatment plant along with specifications of site operations, compliance parameters and their adherence over a period of time. The historic operational data **123₁** collected at the one or more levels are processed and validated by the data validation module **133** to identify the various static data **117** and the dynamic data **119.** Further, quality of the identified static data **117** and the dynamic data **119** is determined by performing one or more statistical and descriptive analysis techniques **163** on the collected operational data.

Based on the quality of the identified static data **117** and the dynamic data **119,** a historical data time frame is decided to analyze each of the collected data. In an embodiment, a provision may be provided for manual selection of historical data time frame for analysis. Typically, the historical data time frame includes various factors that cause changes/modifications in site operations such as seasonal variation, energy consumption trend, operational improvement, other unforeseen changes etc. The changes/modifications in the site operations, which, in turn cause a change in the threshold values, are analyzed by a threshold change management unit **161** in the waste water treatment system **103.** As an example, the historic operational data **123₁** may be collected for predetermined historical data time frames like 2 years or 3 years.

In an embodiment, the real-time threshold values **125** are derived based on the historical threshold values **123.** The historical threshold values **123** may be used as a basis for evaluating the performance of assets in the site and for arriving at applicable data range based on changes and variations in the site in real-time. In an embodiment, the real-time process diagnostic module **165** may be used to diagnose the changes and variations that occur in the waste water treatment plant in real-time. As an example for real-time variation, the volume of influent flow may vary in real-time based on the waste water supply location (industries, households etc.) and/or time of day in which the waste water is received. For example, at early in the morning, say between 1 AM to 5 AM, the volume of influent flow may be less than other time of the day.

The real-time threshold values are **125** derived for each of the one or more operational parameters considering the degree of influence of the operational parameters to meet the final objective (quality parameter, power consumption reduction). The inflection module 137 may be used to identify the /degree of significance of the operational parameters on the one or more waste water treatment processes. In an embodiment, the operational dynamics of the waste treatment plant may undergo multiple changes in real-time due to various reasons. Some of the reasons constituting these changes may include, without limiting to, volume of influent flow, asset performance, external environment condition and status of bacterial flocs. Further, based on the type of variation in the waste water treatment plant, the operational parameters are modulated to achieve the required output from each of the one or more levels of the waste water treatment plant. Finally, in order to identify the real-time threshold values **125** that incorporate the operational variations, the real-time operational data may be compared with the historical threshold values **123** along with degrees of influence and one or more static data **117** such as, SOPs associated with the waste water treatment plant.

In an embodiment, the data **113** may be processed by one or more modules **115** of the waste water treatment system **103.** In one implementation, the one or more modules **115** may also be stored within the memory **107.** In an example, the one or more modules **115** may be communicatively coupled to the processor **109** for performing one or more functions of the waste water treatment system **103.** As used herein, the term module may refer to an application specific integrated circuit (ASIC), an electronic circuit, a processor (shared, dedicated, or group) and memory that execute one or more software or firmware programs, a combinational logic circuit, and/or other suitable components that provide the described functionality.

In one implementation, the one or more modules **115** may include, without limitation, a data collection module **129,** data segregation and processing module **131,** a data validation module **133,** real-time threshold determination module **135,** an inflection module **137,** an auto-tuning module **139,** a self-healing module **141,** a performance evaluation module **143,** a deviation detection module **145,** notification module **147** and other modules **149.** In an embodiment, the other modules **149** may be used to perform various miscellaneous functionalities of the waste water treatment system **103.** It will be appreciated that such aforementioned modules may be represented as a single module or a combination of different modules.

In an embodiment, the data collection module **129** collects the operational data from the one or more data sources **101.** The operational data collected by the data collection module **129** may be categorized into two groups, namely the static data **117** and the dynamic data **119.** The static data **117** are collected at one time and include various levels of information related to each of the one or more levels of the waste water treatment plant, that are most unlikely to be changed over a period of time. On the other hand, dynamic data **119** are the operational data that are subjected to periodical variations. In an embodiment the data collection module **129** uses the following steps during collection of the dynamic data **119.**
a. Identifying list of data points from the one or more data sources **101,** which are to be used for analysis. The data points may be selected at the one or more levels of the waste water treatment plant.
b. Create one or more data extraction channels for extracting the dynamic data **119** from the identified list of data points required for analysis. The data extraction channels are quite dynamic to read the one or more data sources **101** and then to extract the required dynamic data **119.** Further, the data extraction channel tags each data point with a predetermined naming convention for identification and grouping with the predefined algorithms in the waste water treatment plant. In an embodiment, the predetermined naming convention and the predefined algorithms are maintained by the data collection module **129.** The predetermined naming convention may be quite dynamic, which acts as a base structure for grouping the data points at each of the one or more levels of the waste water treatment plant.

In an embodiment, the data validation module **133** validates and processes the operational data collected at each of the one or more levels to get better data for analysis. As an example, some of the validation techniques performed by the data validation module **133** may include, without limiting to, data sample count identification, data values fixed/dynamic range comparison, outlier identification, data error identification and missing value identification. Before processing the operational data for analysis, the operational data is validated to identify one or more omitted, replaced or missing values in the operational data, in order to avoid misinterpretation of the operational data. As an example, different types of data errors/outliers in the collected operational data may include communication errors, data quality errors and system errors. The data validation module **133** uses various preinstalled logics to understand the data points for the outlier/error value treatment process.

In an embodiment, the data validation module **133** may check for following aspects are validation of the operational data:
1. Number of data points received from the one or more levels of the waste water treatment plant.
2. Range of values of the data points received from the one or more levels. Further, the following methods may be used to identify the data samples within the range:
   a. Fixed range values may be identified based on a data type defined by the user.
   b. Limits of values may be dynamically identified based on facility type, operations, dimensions and locations of the waste water treatment plants for the one or more levels including system/sub-system/service. Further, the identified values may be used to operate the one or more operational parameters based on the policies/services/end use for which they are utilized for.

In an embodiment, the data validation module **133** may use the one or more statistical and descriptive analysis techniques **163** for detecting outliers/errors in the collected operational data. These statistical and descriptive analysis techniques **163** may be distance based, depth based, deviation based and density based. Further, predetermined outlier detection algorithms are included in the data validation module **133** to dynamically understand the operational parameters being analysed, to detect the outliers based on the statistical and descriptive analysis techniques **163** and eliminate the outliers.

Further, other validation techniques performed by the data validation module **133** include:
a. Identifying correlation/association based outliers:
   One or more correlation/association based pattern analysis techniques such as, comparing power consumption of various assets with asset run hours, loads on the asset, effluent and influent flow volumes etc. may be used to identify any issues occurring during the mapping of the operational data with the one or more levels of the waste water treatment plant. Also, some of the variations in the samples of the collected operational data, for example volume of influent/effluent flow cannot be constant for more than a certain number of hours.
b. Checking for duplicate samples:
   A duplicate sample of the collected operational data may be identified based on the time stamp associated with the collected operational data. The data samples which have same timestamp and same values may be easily identified and removed. But, in cases where the data sample have same timestamp, but different values, the data sample having a value closer to the acceptable/possible range of values are identified and selected. Additional data samples are moved to a separate database in the waste water treatment system **103.**
c. Checking for missing data/timestamp from raw data:
   Based on the validation results obtained in the previous step b, it is determined whether the data point can be used for further data treatment. Multiple data treatment approaches may be used based on type of issue in the collected operational data. In case of missing data points, the missing values of the operational data are derived based on inputs/data points received for other operational data. Relationships and coefficients are built and refined at each of the one or more levels of the waste water treatment plant based on performance and history of the data samples over a period of time. All the operational data that have been treated are flagged and made available during the analysis. In an embodiment, separate logs may be maintained for both treated and untreated data.

In an embodiment, as a last step in the data validation process, the data validation module **133** performs data profiling on the collected operational data to capture all the validation process and their results. Further, lists of the data points, which cannot be used for analysis, are made available and flags are raised to the management of the waste water treatment plant.

In an embodiment, the data segregation and processing module **131** is responsible for grouping huge amount of the operational data that are collected by the data collection module **129** as the static data **117** and the dynamic data **119** upon validating and processing the operational data by the data validation module **133.** Further, both the static data **117** and the dynamic data **119** undergo segregation and processing. In case of static data **117,** the standard documents (such as SLDs and SOPs) are decoded automatically by dynamic algorithms and converted into predefined formats. Upon decoding, information related to site process, different sections involved in the waste treatment for sites, assets and sub assets mapped to the sections, the data points available, the output targets and the quality parameters allowable tolerances limits are obtained. In case of the dynamic data **119,** the collected dynamic data **119** are segregated based on the static data **117.** The data points available are verified with the collected dynamic data **119** to identify those data points that need to be collected in real-time for analysis. In an embodiment, if any other operational data is required for analysis, the missing operational data are requested from the waste water treatment plant for inclusion in the list of data points.

In an embodiment, the time period and data format of the dynamic data **119** may not be same for each type of the dynamic data **119.** A data conversion process may be performed on the dynamic data **119** to bring the dynamic data **119** into same time period format and data formats for further aggregation. After completing the data conversion process, the collected operational data is aggregated to perform the required analysis. The data aggregation process may be carried out at each of the one or more levels of the waste water treatment plant.

In an embodiment, the data processing operations performed by the data segregation and processing module **131** may be further understood based on the following key steps:
a. Decoding of the static data:
   The static data **117** may be received in various formats owing to the diversity of the water treatment industry. Hence, a decoding process developed for decoding the static data **117** may be quite dynamic. The multiple flow diagrams and process flows are read and processed to identify the data points and to tag them with the appropriate predetermined naming conventions. Also, thresholds, targets and optimal range of the operational data are identified based on the static data **117** points and facility description/design. The data segregation and processing module **131** then maps the assets to the appropriate operational and/or process parameters.
b. Mapping and tagging the dynamic data with the static data:
   Once the static data **117** has been identified and processed, the dynamic data **119** is mapped and tagged with the static data **117.** At this stage, dimensions of analytical algorithms being used for further analysis of the operational data are identified. For example, the analytical algorithms help the data segregation and processing module **131** to identify which site has the data for which level. Further, the available data points are cross checked with the collected operational and if any other data required for analysis are requested from the site.
c. Aggregation of the dynamic data:
   Here, a most crucial step during aggregation of the dynamic data **119** is to bring the collected dynamic data **119** into a common time period format. Usually a highest interval of time available is taken as a standard for the conversion. However, based on the requirement and analysis needs, separate tables may be formed for different groups of time formats. Later, the tables may be aggregated during the analysis. Aggregation of the dynamic data **119** involves organizing data into useful sets and combinations, so that the speed of algorithm processing is faster each time. Further, the data segregation and processing module **131** may be configured with certain fixed techniques for aligning instrumentation data by asset, by time, by service and by facility and to merge these data with schedule, the data points information and external sources of data like weather.
   In an embodiment, the aggregation and aligning of the dynamic data **119** is an on-going process and may be initialized based on request from other modules **115** in the waste water treatment system **103.** As an example for the aggregation of dynamic data **119,** consider a scenario in which values of power consumption of an asset (in kWh) is missing for a few days in a month. Now, the monthly power consumption of the asset may be calculated by aggregating the value of power consumption on the first day of the month and the value of power consumption on the last day of the month, instead of aggregating the values of power consumption on every day of the month.

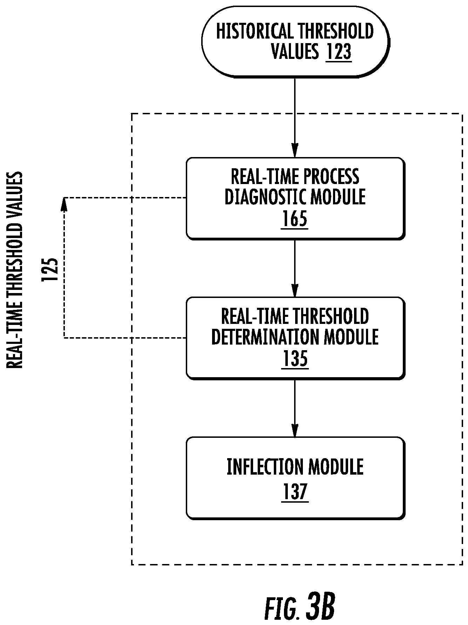

**FIG. 3B** illustrates a method of identifying one or more real-time threshold values.

In an embodiment, the real-time threshold values **125** are derived based on the historical threshold values **123.** The historical threshold values **123** may be used as a basis for evaluating the performance of assets in the site and for arriving at applicable data range based on changes and variations in the site in real-time. In an embodiment, the real-time process diagnostic module **165** may be used to diagnose the changes and variations that occur in the waste water treatment plant in real-time. In an embodiment, the real-time threshold determination module **135** is used for determining one or more real-time threshold values **125** for each of the one or more operational parameters. Upon validating all the operational data, the operational data required for analysis are separated from the consolidated data table into a predetermined time frame. Multiple iterations may be carried out on the historic operational data **123₁** in order to train the operational data for strong and better outcome. A Feedback loop from the performance evaluation module **143** may be linked with the auto-tuning module **139** and the self-healing module **141** as a part of data training to incorporate changes made in the real-time. Similar feedback techniques may be followed for all the operational parameters to identify the real-time threshold values **125** at each of the one or more levels.

The real-time threshold determination module **135** has access to all the historic operational data **123₁** at the one or more levels along with the specifications of site operations, compliance parameters and their adherence over a period of time. After processing and validating all the collected operational data, the static data **117** and the dynamic data **119** within the collected operational data are merged together into same data tables for analysing the collected operational data. Further, the real-time threshold values **125** are identified for each of the one or more operational parameters **121,** relating to the collected operation data, based on the historic operational data **123₁.** The next step is to identify the one or more real-time threshold values **125.** In an embodiment, the real-time threshold values **125** may be identified using the following two steps: The first step is to perform a real-time process diagnostics and the second step is to evaluate the real-time threshold values **125** based on the results of the real-time process diagnostics. The process of real-time process diagnostics and real-time threshold evaluation are explained in further sections of the disclosure. The identified real-time threshold values **125** are fed as an input to the inflection module **137.**

Based on the type of variations, the one or more operational parameters are modulated to achieve the required output. In order to identify the real-time thresholds which incorporates the operational variations, the real-time operational data may be compared with the historical threshold values **123** along with static data **117** such as SOPs.
The process of real-time process diagnostics and real-time threshold evaluation may be carried out in following steps:
1. First step is to understand the dynamics of the waste water treatment plant. In a specific section or in the site level **311,** process related parameters data are collected in real-time by the real-time process diagnostic module **165** which understands the process variations and related changes required in the parameters based on the standard operating procedure. This helps in identifying initial set points required.
2. Second step is to correlate the first step and the historical threshold values **123** to identify the target values. Real-time data are collected, validated and analysis is performed based on trained models in real-time. Threshold limits from the trained models are compared with the real-time data along with the parameter set points and degree of influence between the parameters from historical threshold values **123** identified in the previous module by real-time threshold determination module **135** using statistical and descriptive analytic techniques.
   a. From the historical threshold values **123,** historical performance of the plant is taken to consideration.
   b. Real-time process diagnostic module **165** identifies set points required to be maintained in order to achieve better quality output considering the process related dynamic fluctuations.
   c. Real-time performance of the assets/sub-assets/equipments and their operating limits are taken into consideration to accommodate changes and new real-time threshold values **125** are established for the parameters.

Based on the availability of data in real-time for determining the real-time threshold values **125,** algorithms are dynamically changed. Alerts may be generated using an alert generator in the notification module **147** to notify the operator when the data related to a parameter is not available for analysis.

In an embodiment, the inflection module **137** may be used to identify the one or more inflection points for each of the one or more operational parameters based on the one or more historical threshold values **123,** the one or more real-time threshold values **125** by determining an optimum range for operating the one or more operational parameters. The one or more real-time threshold values **125** identified by the real-time threshold determination module **135** are the optimum values for each of the one or more operational parameters with respect to the historical data. The one or more operational parameters are correlated with each other to identify the optimum range of operational data.

Since the one or more waste water treatment processes vary dynamically, operational changes having quick response time are required to achieve the strict quality norms of the regulatory/government bodies. In future, the quality norms may become more stringent and may require flexibility to incorporate new changes/inputs in the policy variation. Operational improvements are necessary for achieving better yields from the waste water treatment plants and to achieve the target values. Another important parameter which constitutes major cost in the waste water treatment process is energy and/or power consumption. So, process optimization for achieving better yields along with the reduced power consumption may be required in the waste water treatment process. In an embodiment, the inflection module **137** answers both the above requirements.

The operational changes in the waste water treatment plant are further analysed based on the static data **117** and operational experience of the operators. In an implementation, while making operational changes in the waste water treatment plant, the amount of power consumption may become a second priority against achieving the target results. One or more dynamic algorithms may be built in the inflection module **137,** wherein these dynamic algorithms run at each of the one or more levels using the real-time threshold values **125** to produce the optimum range for operating the operational parameters.

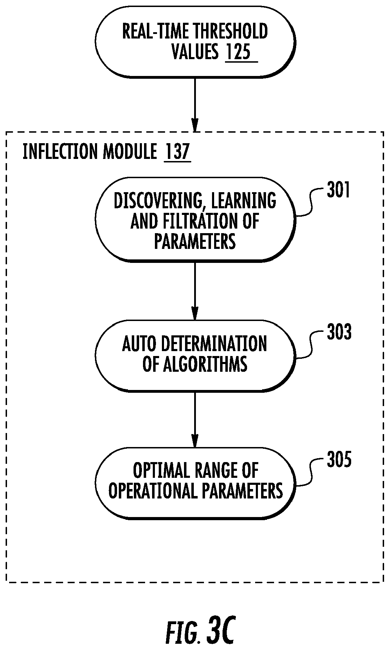

**FIG. 3C** illustrates one or more operations performed by the inflection module **137** by taking the real-time threshold values **125** as the input. The one or more operations performed by the inflection module **137** at each of the one or more levels of the waste water treatment plant may be understood based on the steps as under:
**Step 1:** Discovering, Learning and Filtration of parameters using the real-time threshold values:
   As shown in block **301** of **FIG. 3C****,** a degree of influence of each of the one or more operational parameters, in a sequence of order of each of the one or more levels, are discovered for addressing the dynamic variations based on the real-time threshold values **125.** The real-time threshold values **125** are used for learning by the inflection module **137.** Learning based on the real-time threshold values **125** helps to determine the significance and strength of each of the one or more operational parameters at each of the one or more levels. For example, the real-time threshold determination module **135** may train the inflection module **137** with degrees of significance of each of the operational parameters in section level **313.**
   In an embodiment, only those operational parameters which need to be modulated by the one or more operational changes with respect to process dynamics are filtered based on the strength of the operational parameter, significance the operational parameter on power consumption, quality and government/regulatory norms. Discovering, Learning and Filtering are done at each of the one or more levels. A final consolidated list of parameters, which are required to be modulated with respect to the dynamic process variations are identified by the inflection module **137.**
**Step 2:** Selecting algorithms for determining the optimal range:
   At block **303,** the algorithms for determining the optimum range are selected based on the type of assets, processes, technology adapted at sites. While default algorithms are provided, one can choose the options or can have the flexibility of fine tuning the algorithm based on site constraints such as data, process adoption, system implementations etc.
**Step 3:** Execute the algorithms to identify inflection points:
   Third step in the inflection module **137** is performed after selecting the algorithms for determining the optimum range of operational parameters. At block **305,** multiple algorithms may be executed on the operational data to obtain one or more inflection points of the waste water treatment process. Operating the one or more operational parameters in the one or more inflection points may result in better quality results of waste treatment i.e. better output flow, better yield with reduced power consumption. The one or more inflection points also help in identifying the optimum range of the parameters at each of the one or more levels of operation.

The working of the inflection module **137** may be explained with the help of following scenario:
Consider a typical waste water treatment plant that has multiple lanes for treatment of the waste water, where aerobic process requires oxygen as an important parameter. Here, the oxygen amount needs to be modulated according to the influent flow, BOD, COD, MLSS and other loads, which may be measured through a DO probe. DO values may be altered by changing the DO set point in controllers according to the requirement by actuated valve control or speed modulation in blowers. So, in this scenario, whenever there is a dynamic change in the one or more operational parameters, DO values will be modified. From the real-time threshold determination module 135, DO threshold values are received along with threshold values of influent flow, COD, BOD, blower consumption, speed, air flow, air pressure and valve position based on comparison of present DO value to the historic range of DO.

In the inflection module **137,** interpretation and filtration of the required operational parameters are interpreted by comparing each lane in the sections, zones performances within the lanes, effluent quality checkpoints to be maintained, volume of solids from output fed into input of treatment, turbidity of influent etc. After interpretation, filtration of the required operational parameters is done i.e. only 5 parameters may be interpreted out of the 20 parameters. Algorithms are selected based on multiple criteria to identify the inflection point of the process in order to reduce power consumption and achieve best process results. The optimum range will be achieved from the algorithms for the process changes mentioned above. Optimum DO inflection point is given by the inflection module **137** in order to reduce power consumption and achieve best process results.

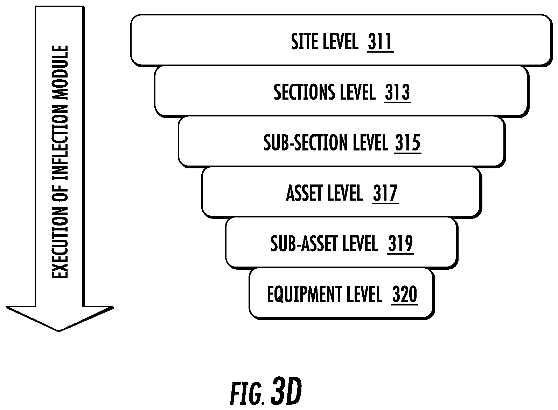

Though there are fixed relationships that can be built form the initial input, based on data points received, the algorithm tunes the detection mechanism from highest possible level of the section, process and system and drills down to the best possible granular level. **FIG. 3D** indicates various levels of execution of the inflection module **137** to identify one or more actions that require improvements at the one or more levels of the waste water treatment plant. As an example, the inflection module **137** may tune the detection mechanism starting from the highest level (site level **311**) through to the lowest granular level (equipment level **320**). The improvements identified for attaining the inflection point and optimal range of values needs to be executed in order to reduce power consumption and achieve best process results.

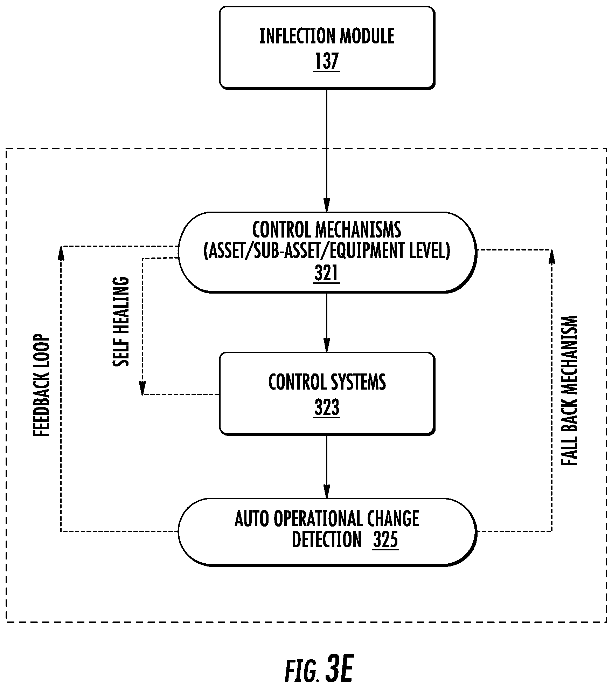

In an embodiment, the auto-tuning module **139** fine tunes the performance of assets and processes of the waste water treatment plants based on the inputs received from the inflection module **137** as shown in **FIG. 3E****.** One or more algorithms built in the auto-tuning module **139** enable changes in the one or more levels to achieve the optimal values determined by the inflection module **137.** The equipment operations are controlled by the centralized or distributed control systems **323** at the one or more levels using the control mechanisms **321.** Assets/sub-assets/equipments in each section of the waste water treatment plant may be controlled and monitored with the help of control systems **323** such as DCS, SCADA, and PLC Control etc. These control systems **323** may comprise written control logics based on which automatic signals are triggered to perform operational changes on equipments automatically as indicated at step **325.** The equipments are operated in the optimal range of values and the feedbacks are collected to monitor the performance. In an embodiment, the collected feedbacks may be applied on the control mechanisms **321** to further fine-tune the outcomes.

In an embodiment, the auto-tuning module **139** receives inflection points for each of the one or more operational parameters. Then the received inflection points are converted to control mechanisms **321** by the predefined algorithms configured in the auto-tuning module **139.** The predefined control mechanisms **321** are executed by the control systems **323** and the feedback is collected from the control systems **323.** Based on the feedback, the auto-tuning module **139** understands the operational changes made in the system and their effectiveness. If the change required is not reflected in the system due to operational constraints/electromechanical issues, one or more self-healing algorithms are executed for the changes to be made in instruments/equipment. The self-healing algorithms are predefined for a set of instrument's/equipment's predominantly and are managed and operated by the self-healing module **141.** Additional modifications of the self-healing algorithms may also be possible based on the site requirement. Finally, all the variations are tracked and recorded for any fall back mechanism that needs to be enabled if the situation demands, based on performance issues. The performance issues/notifications if any, are recorded and flagged based on a predefined structure and are notified to relevant stakeholders.

In an embodiment, the performance evaluation module **143** may be used to evaluate the performance of each asset in the waste water treatment plant in order to reduce power consumption without impacting the quality and policy requirements by operating the equipment/sub-assets/assets based on the control mechanisms **321** generated in the auto-tuning module **139.** The systems may need to undergo changes in relation with the changes suggested by the control mechanisms **321.** For an instance, if the changes are not effective, then it would be very difficult to operate each asset with respect to the process fluctuations.

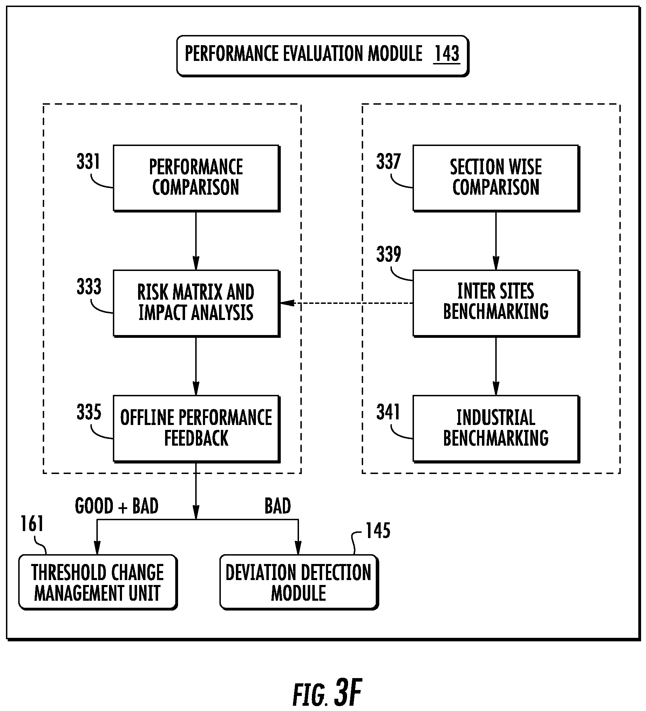

**FIG. 3F** illustrates a method of evaluating performance of the one or more control mechanisms **321.** Initially, the values of each of the one or more operational parameters are measured in the sections where improvements are anticipated and then the results are compared with the anticipated values at step **337.** Energy consumption, operational cost, quality, yield and other KPIs in the waste treatment plant are compared with the baseline values. In an embodiment, the baseline values are arrived from the historical threshold values **123.** At step **331,** the performances of various assets are evaluated and demarked as good performance or bad performance and appropriate reports are generated accordingly. Similarly, the performance of the waste water treatment plant may be checked at the one or more levels to prepare a best performing and worst performing assets/sub-asset matrices. Then the performance or operations of the assets/sub-assets/equipments are compared with a benchmark between the sites (inter site benchmarking as indicated in step **339**) or across other industry sites (industrial benchmarking as indicated in step **341**). After benchmarking, the detailed risk matrix and impact analysis for the site are prepared and a deviation report comprising list of assets/sub-assets which require special attentions is prepared and sent to the deviation detection module **145.**

In an embodiment, the performances may be captured and recorded for training the algorithms in a threshold change management unit **161** configured in the waste water treatment system **103** through the feedback loop. Further, offline simulation of the treatment processes may be carried out and based on the performance of the sections/assets/sub-assets, the operators may give comments. The comments received from the operators may be converted to a machine readable data format and may be captured during training from the auto-tuning module **139.**

In an embodiment, the deviation detection module **145** is initialized when the one or more actions triggered by the auto-tuning module **139** do not yield results as expected (within limits) after evaluating the performance. Before concluding the outcome of results, the patterns are analysed to validate and verify the working nature of the one or more actions. Some of the actions could be at asset level **317,** sub-asset level **319,** process level, sub-process level, and section level **313.** Owing to the complexity of the one or more operational parameters involved and changes in operating specifications, correlation plays vital role in relating the multiple parameters for assessing if the reason for non-performance is associated with any external or governing parameter or it is due to the individual element level. In this module individual asset's efficiency and maintenance activities are correlated to come out with predictive maintenance schedules to avoid the breakdown of the asset and improve plant uptime.

The output changes identified from the inflection point analysis are monitored and accuracy of the inflection points is measured by the deviation detection module **145.** Fault detections may be reported to the management to manage the optimal range. In an embodiment, the output of the inflection module **137** may be always checked and modified if required. For example, if the position of the auto valve has to be changed from 80% to 50% to reduce the DO value then the auto-tuning module **139** makes the necessary changes using the control systems **323** based on the control mechanisms **321.** The performance evaluation module **143** checks whether the DO value is reduced by performing baseline comparison, risk analysis and impact analysis to understand whether it was a Good performance or a Bad performance. In case it is a Bad performance, the deviation detection module **145** identifies the problem with the multiple checks on the assets/sub-assets/equipment's involved in the operational change. As an example, the problems identified by the deviation detection module **145** may include, without limiting to, DO probe calibration error, DO probe signal error, valve communication error, valve not operating properly and valve jam etc.

In an embodiment, a priority matrix and a risk assessment matrix may be prepared to understand the depth of deviation and determine appropriate solution for the problems. Specific algorithms are executed to segregate the deviations which may be solved with or without manual intervention.

In an embodiment, the notification module **147** may be responsible for generating alerts and reports and notifying the generated alerts and reports to the operators. In one implementation, the notification module **147** may comprise a ticket generator, an alert generator and a report generator. Based the deviation detection module **145,** one or more issues which require manual intervention or when priority associated with the issue is very high, the issues are transferred directly to the ticket generation module.

### a. Ticket generator:

Tickets are raised when manual intervention is required for correction of deviations. The ticket generator comprises a list of predefined assets and problems. From the list of problems, one or more check points may be noted to identify the type of problem in the asset and generate ticket accordingly. It prioritizes the deviations, based on the quantum and types of deviations, the tickets are prioritized for each required actions. For example, an asset can undergo mechanical problem, electrical problem, instrument problems etc. so segregating the type of problem is crucial in this module. Generating the ticket based on the problem is very important to generate right order to the relevant vendor. In an embodiment, the tickets may be generated by the deviation detection module **145** to notify the actions necessary to be performed to overcome the deviations. The tickets are generated based on the type of problem to be addressed with predefined comments and are triggered to one or more operators at specific departments in the waste water treatment site. Once the concerned department completes the action, the comments may be collected and sent to the threshold change management unit **161** for training the data and to record maintenance logs. Finally, the tickets may be allowed to close once they are handled as said above.

### b. Alert generator:

Alerts are generated and notified to the predefined stakeholders upon generating the tickets based on the risk assessment matrix created. The tickets may be classified as resolved and not resolved. Based on the output of the performance evaluation module **143,** one or more alerts are generated for the assets having high risks and/or problems. Based on the priority matrix and the risk assessment matrix, alerts are generated to a fast action. In an embodiment, the alerts may be generated in a sequence of order to escalate the problem based on predetermined rules.

### c. Report generator:

The performance reports may be generated and extracted at enterprise level, site level **311** and asset levels **317.** The benchmarking reports, KPI reports, inflection point analysis reports and performance evaluation reports are some of the reports generated by the report generator. In an embodiment, each of these reports may be made available for extraction by the user.

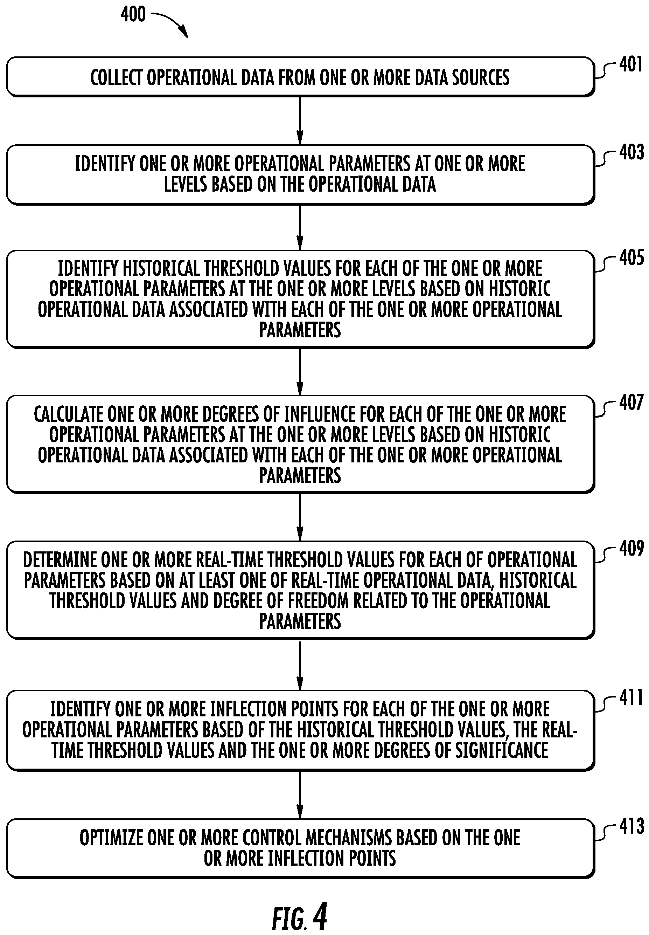

**FIG. 4** shows a flowchart illustrating a method for dynamically managing waste water treatment process in a waste water treatment plant for optimizing power consumption in accordance with some embodiments of the present disclosure.

As illustrated in **FIG. 4****,** the method **400** comprises one or more blocks for dynamically generating multimedia content file using a waste water treatment system **103.** The method **400** may be described in the general context of computer executable instructions. Generally, computer executable instructions can include routines, programs, objects, components, data structures, procedures, modules, and functions, which perform particular functions or implement particular abstract data types.

The order in which the method **400** is described is not intended to be construed as a limitation, and any number of the described method blocks can be combined in any order to implement the method. Additionally, individual blocks may be deleted from the methods without departing from the spirit and scope of the subject matter described herein. Furthermore, the method can be implemented in any suitable hardware, software, firmware, or combination thereof.

At **block 401,** the waste water treatment system **103** collects operational data from one or more data sources **101.** In an embodiment, the operational data may comprise at least one of static data **117** and dynamic data **119.**

At **block 403,** the waste water treatment system **103** identifies one or more operational parameters at one or more levels based on the operational data. The one or more operational parameters are used for managing one or more waste water treatment processes. In an embodiment, the operational data are validated for improving quality of the operational data related to each of the one or more operational parameters. Upon identifying the one or more operational parameters the waste water treatment system **103** performs decoding of the static data **117** associated with the one or more waste water treatment processes. Further, the dynamic data **119** associated with the one or more operational parameters are mapped to the static data **117.** In one scenario the dynamic data **119** may be converted into a predefined data format before associating the dynamic data **119** with a time period. Thereafter, the dynamic data **119** are aggregated into groups of the predefined data format and common time period.

At **block 405,** the waste water treatment system **103** identifies one or more historical threshold values **123** for each of the one or more operational parameters at the one or more levels based on historic operational data **123₁** associated with each of the one or more operational parameters. In an embodiment, the one or more levels of the one or more waste water treatment processes includes enterprise level, site level **311,** section level **313,** sub-section level **315,** asset level **317,** sub-asset level **319,** process level, sub-process level and equipment level **320.**

At **block 407,** the waste water treatment system **103** calculates one or more degrees of influence for each of the one or more operational parameters at the one or more levels based on historic operational data **123₁** associated with each of the one or more operational parameters.

At **block 409,** the waste water treatment system **103** determines one or more real-time threshold values **125** for each of the one or more operational parameters based on at least one of real-time operational data, historical threshold values **123** and degree of freedom related to each of the one or more operational parameters. In an embodiment, the one or more variations in each of the one or more operational parameters are identified based on the one or more historical threshold values **123,** the one or more real-time threshold values **125** along with the degrees of influence and one or more plant diagnostics associated with the one or more waste water treatment processes. As an example, the one or more plant diagnostics comprises design parameters, asset parameters, policy norms and control mechanisms **321.**

At **block 411,** the waste water treatment system **103** identifies one or more inflection points for each of the one or more operational parameters based on the one or more historical threshold values **123,** the one or more real-time threshold values **125** and the one or more degrees of significance. In an embodiment, determining the one or more inflection points further comprises identifying an optimal range for operating each of the one or more operational parameters at each of the one or more levels. The optimal range may be identified by determining a degree of significance of each of the one or more operational parameters, in a sequential order, at each of the one or more levels of the waste water treatment process, and identifying the one or more operational parameters having greater degree of significance than a predefined degree of significance.

At **block 413,** the waste water treatment system **103** optimizes one or more control mechanisms **321** based on the one or more inflection points thereby, optimizing power consumption for the waste water treatment plant. The one or more control mechanisms **321** may be optimized by improving the one or more control mechanisms **321** for one or more operations of one or more equipments associated with the one or more waste water treatment processes, and evaluating performance of the one or more control mechanisms **321** based on predefined performance standards, However, evaluating the performance of the one or more control mechanisms **321** further comprises detecting a deviation in implementation of the one or more control mechanisms **321** through a feedback loop, detecting a deviation in the performance of the one or more implemented control mechanism **321** and performing one or more changes to the one or more control mechanisms **321** on detecting the deviation until the one or more operational parameters operate in the optimal range. Finally, the waste water treatment plant generates one or more performance reports of the waste water treatment process at each of the one or more levels of the waste water treatment process.

### Computer System

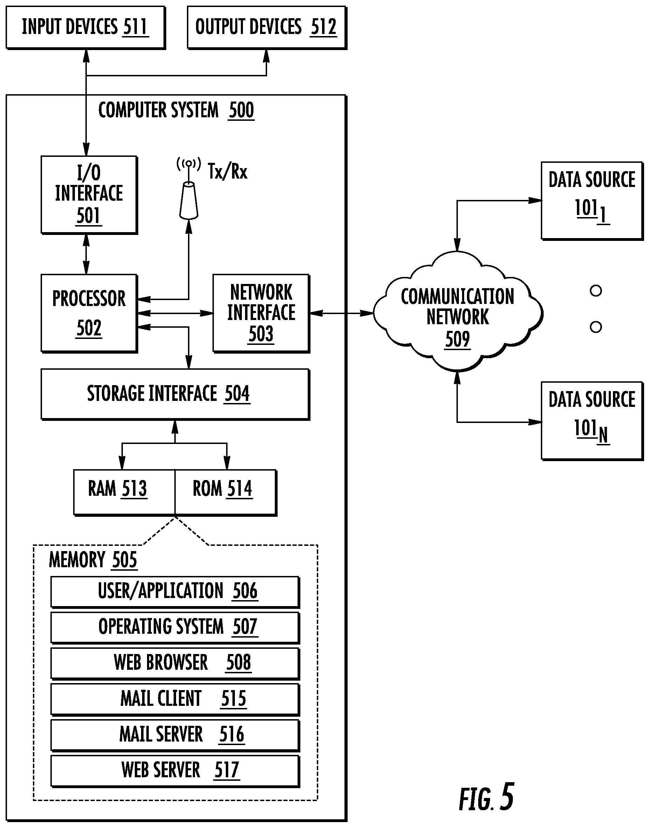

**FIG. 5** illustrates a block diagram of an exemplary computer system **500** for implementing embodiments consistent with the present invention. In an embodiment, the computer system **500** may be the waste water treatment system **103** which is used for dynamically managing waste water treatment process in a waste water treatment plant. The computer system **500** may comprise a central processing unit ("CPU" or "processor") **502.** The processor **502** may comprise at least one data processor for executing program components for executing user or system generated business processes. A user may include a person, a person using a device such as such as those included in this invention, or such a device itself. The processor **502** may include specialized processing units such as integrated system (bus) controllers, memory management control units, floating point units, graphics processing units, digital signal processing units, etc.

The processor **502** may be disposed in communication with one or more input/output (I/O) devices (**511** and **512**) via I/O interface **501.** The I/O interface **501** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), HighSpeed Packet Access (HSPA+), Global System For Mobile Communications (GSM), Long-Term Evolution (LTE) or the like), etc.

Using the I/O interface **501,** the computer system **500** may communicate with one or more I/O devices (**511** and **512**).

In some embodiments, the processor **502** may be disposed in communication with a communication network **509** via a network interface **503.** The network interface **503** may communicate with the communication network **509.** The network interface **503** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **503** and the communication network **509,** the computer system **500** may communicate with one or more data sources **101** (data source **101₁** to data source **101_{N}**) for collecting the operational data. The communication network **509** can be implemented as one of the different types of networks, such as intranet or Local Area Network (LAN) and such within the organization. The communication network **509** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **509** may include a variety of network devices, including routers, bridges, servers, computing devices, storage devices, etc.

In some embodiments, the processor **502** may be disposed in communication with a memory **505** (e.g., RAM **513** and ROM **514** as shown in **FIG. 5**) via a storage interface **504.** The storage interface **504** may connect to memory **505** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **505** may store a collection of program or database components, including, without limitation, user/application data **506,** an operating system **507,** web server **508** etc. In some embodiments, computer system **500** may store user/application data **506,** such as the data, variables, records, etc. as described in this invention. Such databases may be implemented as fault-tolerant, relational, scalable, secure databases such as Oracle or Sybase.

The operating system **507** may facilitate resource management and operation of the computer system **500.** Examples of operating systems include, without limitation, Apple Macintosh OS X, UNIX, Unix-like system distributions (e.g., Berkeley Software Distribution (BSD), FreeBSD, Net BSD, Open BSD, etc.), Linux distributions (e.g., Red Hat, Ubuntu, K-Ubuntu, etc.), International Business Machines (IBM) OS/2, Microsoft Windows (XP, Vista/7/8, etc.), Apple iOS, Google Android, Blackberry Operating System (OS), or the like. A User interface may facilitate display, execution, interaction, manipulation, or operation of program components through textual or graphical facilities. For example, user interfaces may provide computer interaction interface elements on a display system operatively connected to the computer system **500,** such as cursors, icons, check boxes, menus, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system **500** may implement a web browser **508** stored program component. The web browser may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system **500** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **500** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

### Advantages of the embodiment of the present disclosure are illustrated herein.

In an embodiment, the present disclosure provides a method for real-time management of various waste water treatment processes and power consumption involved in a waste water treatment plant.

In an embodiment, the present disclosure provides a method for managing water treatment processes on a large-scale, without actually visiting a waste water treatment plant, thereby reducing dependency on expertise and skilled resources.

In an embodiment, the method of present disclosure detects control mechanisms being used to control equipments/instruments at a waste water treatment plant based on pattern of data collected from the waste water treatment plants, without explicitly requiring any information on the control logics being used.

In an embodiment, the method of present disclosure automatically monitors, detects and takes suitable corrective actions to overcome errors and/or discrepancies in the waste water treatment plant.

In an embodiment, the present disclosure provides a unique methodology for correlating multiple factors associated with the waste water treatment plant by taking into account the site discrepancies, thereby providing flexibility in obtaining similar outcomes with limited set of data.

In an embodiment, the method of present disclosure triggers one or more corrective actions required to mitigate non-compliance/statutory issues on a temporary basis, while detection of these issues helps in providing a permanent fix to the discrepancies.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Referral Numerals:**

| **Reference Number** | **Description** |
|---|---|
| 100 | Environment |
| 101 | Data source |
| 103 | Waste water treatment system |
| 105 | I/O interface |
| 107 | Memory |
| 109 | Processor |
| 113 | Data |
| 115 | Modules |
| 117 | Static data |
| 119 | Dynamic data |
| 119a | Internal data |
| 119b | External data |
| 123₁ | Historic operational data |
| 123 | Historical threshold values |
| 125 | Real-time threshold values |
| 127 | Other data |
| 129 | Data collection module |
| 131 | Data segregation and processing module |
| 133 | Data validation module |
| 135 | Real-time threshold determination module |
| 137 | Inflection module |
| 139 | Auto-tuning module |
| 141 | Self-healing module |
| 143 | Performance evaluation module |
| 145 | Deviation detection module |
| 147 | Notification module |
| 149 | Other modules |
| 161 | Threshold change management unit |
| 163 | Statistical and descriptive analysis techniques |
| 165 | Real-time process diagnostic module |
| 321 | Control mechanisms |
| 323 | Control systems |

## Claims

1. A method for dynamically managing waste water treatment process in a waste water treatment plant, the method comprising:
collecting, by a waste water treatment system (103), operational data from one or more data sources (101);
identifying, by the waste water treatment system (103), one or more operational parameters at one or more levels based on the operational data, wherein the one or more operational parameters are used for managing one or more waste water treatment processes;
identifying, by the waste water treatment system (103), one or more historical threshold values (123) for each of the one or more operational parameters at the one or more levels based on historic operational data (123₁) associated with each of the one or more operational parameters;
calculating, by the waste water treatment system (103), one or more degrees of influence for each of the one or more operational parameters at the one or more levels based on historic operational data (123₁) associated with each of the one or more operational parameters;
determining, by the waste water treatment system (103), one or more real-time threshold values (125) for each of the one or more operational parameters based on at least one of real-time operational data, historical threshold values (123) and degrees of freedom related to each of the one or more operational parameters;
identifying, by the waste water treatment system (103), one or more inflection points for each of the one or more operational parameters based on the one or more historical threshold values (123), the one or more real-time threshold values (125) and the one or more degrees of significance; and
optimizing, by the waste water treatment system (103), one or more control mechanisms (321) based on the one or more inflection points thereby, optimizing power consumption for the waste water treatment plant.

2. The method as claimed in 1, wherein the operational data comprises at least one of static data (117) and dynamic data (119); preferably
wherein identifying one or more operational parameters further comprises:
decoding the static data (117) associated with the one or more waste water treatment processes;
mapping the dynamic data (119) associated with the one or more operational parameters to the static data (117);
converting the dynamic data (119) into a predefined data format and associating the dynamic data (119) with a time period; and
aggregating the dynamic data (119) into groups of the predefined data format and common time period.

3. The method as claimed in any preceding claim further comprising validating the operational data for improving quality of the operational data related to each of the one or more operational parameters.

4. The method as claimed in any preceding claim, wherein the one or more levels of the one or more waste water treatment processes includes enterprise level, site level, section level, sub-section level, asset level, sub-asset level, process level, sub-process level and equipment level.

5. The method as claimed in any preceding claim, wherein one or more variations in each of the one or more operational parameters are identified based on the one or more historical threshold values (123), the one or more real-time threshold values (125) and one or more plant diagnostics associated with the one or more waste water treatment processes; preferably
wherein the one or more plant diagnostics comprises design parameters, asset parameters, policy norms and one or more control mechanisms (321).

6. The method as claimed in any preceding claim, wherein determining the one or more inflection points further comprises identifying an optimal range for operating each of the one or more operational parameters at each of the one or more levels.

7. The method as claimed in any preceding claim further comprises identifying the one or more operational parameters for determining optimal range by performing steps of:
determining a degree of influence of each of the one or more operational parameters, in a sequential order, at each of the one or more levels of the waste water treatment process; and
identifying the one or more operational parameters having greater degree of significance than a predefined degree of significance; and/or
wherein the method further comprises generating one or more performance reports of the waste water treatment process at each of the one or more levels of the waste water treatment process.

8. The method as claimed in any preceding claim, wherein optimizing the one or more control mechanisms (321) comprises:
modifying the one or more control mechanisms (321) for one or more operations of one or more equipments associated with the one or more waste water treatment processes; and
evaluating performance of the one or more control mechanisms (321) based on predefined performance standards; preferably
wherein evaluating the performance of the one or more control mechanisms (321) further comprises:
detecting a deviation in implementation of the one or more control mechanisms (321) through a feedback loop;
detecting a deviation in the performance of the one or more implemented control mechanism (321);
performing one or more changes to the one or more control mechanisms (321) on detecting the deviation until the one or more operational parameters operate in the optimal range.

9. A waste water treatment system (103) for dynamically managing waste water treatment process in a waste water treatment plant, the waste water treatment system (103) comprising:
a processor (109); and
a memory (107) communicatively coupled to the processor (109), wherein the memory (107) stores processor-executable instructions, which, on execution, causes the processor (109) to:
collect operational data from one or more data sources (101);
identify one or more operational parameters at one or more levels based on the operational data, wherein the one or more operational parameters are used for managing one or more waste water treatment processes;
identify one or more historical threshold values (123) for each of the one or more operational parameters at the one or more levels based on historic operational data (123₁) associated with each of the one or more operational parameters;
calculate one or more degrees of influence for each of the one or more operational parameters at the one or more levels based on historic operational data (123₁) associated with each of the one or more operational parameters;
determine one or more real-time threshold values (125) for each of the one or more operational parameters based on at least one of real-time operational data, historical threshold values (123) and degree of freedom related to each of the one or more operational parameters;
identify one or more inflection points for each of the one or more operational parameters based on the one or more historical threshold values (123), the one or more real-time threshold values (125) and the one or more degrees of significance; and
optimize one or more control mechanisms (321) based on the one or more inflection points, thereby optimizing power consumption for the waste water treatment plan.

10. The waste water treatment system (103) as claimed in claim 9, wherein the operational data comprises at least one of static data (117) and dynamic data (119); preferably wherein to identify one or more operational parameters, instructions further causes the processor (109) to:
decode the static data (117) associated with the one or more operational parameters to the static data (117);
map the dynamic data (119) associated with the one or more operational parametres to the static data (117);
convert the dynamic data (119) mapping the dynamic data (119) into a predefined data format and associating the dynamic data (119) with a time period; and
aggregate the dynamic data (119) into groups of the predefined data format and common time period.

11. The waste water treatment system (103) as claimed in claim 9 or 10, wherein the instructions further causes the processor (109) to validate the operational data for improving quality of the operational data related to each of the one or more operational parameters; and/or
wherein the one or more levels of the one or more waste water treatment processes includes enterprise level, site level, section level, sub-section level, asset level, sub-asset level, process level, sub-process level and equipment level.

12. The waste water treatment system (103) as claimed in claim 9, 10 or 11, wherein the processor (109) identifies one or more variations in each of the one or more operational parameters based on the one or more historical threshold values (123), the one or more real-time threshold values (125) and one or more plant diagnostics associated with the one or more waste water treatment processes; preferably
wherein the one or more plant diagnostics comprises design parameters, asset parameters, policy norms and control mechanisms (321).

13. The waste water treatment system (103) as claimed in any of claims 9 to 12, wherein the instructions further causes the processor (109) to identify an optimal range to operate each of the one or more operational parameters at each of the one or more levels.

14. The waste water treatment system (103) as claimed in any of claims 9 to 13, wherein to determine optimal range the instructions further causes the processor (109) to:
determine a degree of influence of each of the one or more operational parameters, in a sequential order, at each of the one or more levels of the waste water treatment process; and
identify the one or more operational parameters having greater degree of significance than a predefined degree of significance; and/or wherein the processor (109) generates one or more performance reports of the waste water treatment process at each of the one or more levels of the waste water treatment process.

15. The waste water treatment system (103) as claimed in any of claims 9 to 14, wherein to optimize the one or more control mechanisms (321) the instructions causes the processor(109) to:
modify the one or more control mechanisms (321) for one or more operations of one or more equipments associated with the one or more waste water treatment processes; and
evaluate performance of the one or more control mechanisms (321) based on predefined performance standards; preferably
wherein to evaluate the performance of the one or more control mechanisms (321) the instructions further causes the processor (109) to:
detect a deviation in implementation of the one or more control mechanisms (321) through a feedback loop;
detect a deviation in the performance of the one or more implemented control mechanism (321); and
perform one or more changes to the one or more control mechanisms (321) on detecting the deviation until the one or more operational parameters operate in the optimal range.
